# EUROPEAN PATENT APPLICATION

(11) **EP 1 215 217 A1**
(43) Date of publication of application: **19.06.2002**
(21) Application number: 00204465.9
(22) Date of filing: 12.12.2000
(51) Int. Cl.: C08B 15/04

(54) **High molecular weight oxidised cellulose**

(71) Applicant: SCA Hygiene Products Zeist B.V., 3700 AJ Zeist (NL)
(72) Inventor: Besemer, Arie Cornelis, 3958 CC Amerongen (NL); Van Brussel-Verraest, Dorine Lisa, 2411 WG Bodegraven (NL)
(74) Representative: Jorritsma, Ruurd

(57) **Abstract**

The invention pertains to a process for producing oxidised cellulose having a high molecular weight, by pre-treating cellulose in a non-alkaline solvent for cellulose so as to lower its crystallinity, and then oxidising it using an oxidising system predominantly oxidising the 6-hydroxymethyl groups or the 2,3-dihydroxyethylene groups to carbaldehyde and/or carboxyl groups. The oxidising agent is preferably a nitroxyl compound or periodate, and the product is useful as a water-absorbent.

## Description

The present invention relates to a process for producing a novel type of high molecular weight oxidised cellulose that is water-soluble and can be used as an economically attractive alternative for carboxymethyl cellulose (CMC), for example as a superabsorbent polymer for use in hygiene articles or as a wet strength agent in papermaking.

Oxidised celluloses have the advantage of being accessible from renewable raw materials only and potentially of being less expensive than CMC, while they may have comparable properties to CMC. However, the oxidation of cellulose is hampered by the poor solubility of cellulose, making it insufficiently accessible to oxidising agents.

Superabsorbent products based on oxidised and crosslinked carbohydrates such as starch and cellulose are disclosed in WO 98/27117. Unpretreated cellulose, however, is not a very suitable starting material for these products, because of its poor solubility.

A process for oxidising cellulose with TEMPO (2,2,6,6-tetramethylpiperidine-1-oxyl) to produce 6-carboxy cellulose (polyglucuronic acid or "cellouronic acid") has been described (Isogai and Kato, *Cellulose* **1998, 5**, 153-164). High degrees of oxidation are obtained when the cellulose is pre-treated by mercerisation in 20% aqueous sodium hydroxide. The article is, however, silent on specific utilities of the products obtained by the process described. The present inventors have reproduced the TEMPO-mediated oxidation of cellulose as described by Isogai and Kato and have found that, although the oxidation proceeds efficiently, the products is a non-homogeneous product of which the bulk fraction has a low molecular weight, and is unsuitable for making superabsorbent materials.

The problem underlying the present invention is to provide an inexpensive process for producing water-soluble homogeneously oxidised cellulose derivative from fibrous material, with a relatively high molecular weight, that can be used for various purposes including the use as a water-absorbing material. This problem is solved by the process defined in the appending claims.

According to the invention, the cellulosic fibres are pretreated with a non-alkaline solvent. A non-alkaline solvent is understood to be any solvent in which cellulose fibres are at least partly soluble and which (if required, after addition of water so as to allow a pH to be measured) has a pH below 11. It is preferred that the non-alkaline solvent has a pH below 9.

Suitable solvents for cellulose are known in the art. A very suitable solvent is concentrated phosphoric acid, including combinations with other phosphoric oxides (see e.g. WO 97/28298 and WO 96/06208). Another advantageous type of solvent includes aqueous tertiary amine-oxides, such as those described in US 4,246,221, especially *N*-methyl-morpholine-*N*-oxide, NMMO (see WO 96/30410 and WO 99/54361) and *N*-methylpiperidine-*N*-oxide. Other examples of suitable solvents are carboxamides such as dimethylformamide, dimethylacetamide, *N*-methylpyrrolidone, ethylene-urea, hexamethylphosphoric triamide, etc., preferably in the presence of lithium salts, or aqueous solvents containing complexes of metals such as copper, cobalt, nickel, iron and zinc. Examples of the latter include copper-ammonia (about 0.2 M copper), copper-ethylenediamine (about 0.5 M copper) and nickel-ammonia complexes, ferric tartrate etc. Strong acids other than phosphoric acid, such as sulphuric and hydrochloric acid can also be used. These and further cellulose solvents have been reviewed by Jayme and Lang, Methods in Carbohydrate Chemistry (R.L. Whistler, Ed.) Vol. III, 1963, pp.75, and by Heinze and Liebert, *Cellulose Chem. Technol.* **32**, 3-18 (1998).

The pretreatment in the non-alkaline solvent can be performed by stirring or other mechanical treatment for an extended period of time, e.g. from 1 hour to several days, depending on the reaction temperature. Thereafter the treated cellulose is preferably separated from the non-alkaline solvent, e.g. by addition of a non-solvent, such as cold water, salt-containing water, alcohols or the like, which does not or only partly solubilise the cellulose.

After the pretreatment, the cellulose is sufficiently accessible for oxidising agents. The pretreated cellulose is oxidised, using oxidising agents that either convert hydroxymethylene groups (-CHOH-) at the 2- or 3-position of the anhydroglucose unit of cellulose, or hydroxymethyl groups (-CH₂OH) at their 6-position, or both, to carbaldehyde groups (-CHO) and/or carboxyl groups (-COOH).

Preferably oxidising agents and conditions are used that favour oxidation of the primary hydroxyl groups at the 6-position. Such oxidising agents include nitroxyl radicals, or a precursor thereof as the direct oxidising agent, i.e. as a catalyst. A precursor is understood to comprise compounds which under the reaction conditions can form nitroxyl radicals, such as the hydroxylamines and nitrones of the corresponding nitroxyls.

A catalytic amount of nitroxyl is preferably 0.05-10% by weight, based on the dry weight of the cellulosic fibre, or 0.05-10 mol% with respect to the hydroxymethyl (-CH₂OH) groups the cellulose. Preferably the nitroxyl is present in an amount of 0.1-2.5%.

The ultimate oxidising agent can be any oxidising agent capable of reoxidising reduced nitroxyls, such as ozone and especially a hypohalite. The amount of oxidising agent is especially 0.1-15 wt.%, preferably 0.5-5 wt.% with respect to the dry weight of the cellulosic fibre. The oxidation can be performed at ambient temperature or increased temperature and over a broad pH range of e.g. 1 to 13, especially at pH e.g. from 6.5 to 11.5, most preferably from 8 to 11.

In the following description, reference is made to TEMPO only for the sake of simplicity, but it should be understood that other cyclic nitroxyls, such as 2,2,5,5-tetramethylpyrrolidine-*N*-oxyl (PROXYL), 4,4-dimethyloxazolidine-*N*-oxyl (DOXYL) and 4-hydroxy TEMPO and derivatives thereof such as the 4-phosphonooxy, 4-acetoxy, 4-benzoyloxy, 4-oxo, 4-amino, 4-acetamido, 4-maleimido, 4-isothiocyanato, 4-cyano, 4-carboxy TEMPO can be substituted for TEMPO. These di-tert-alkyl and/or cyclic nitroxyls are especially suitable for selectively oxidising primary alcohols to aldehyde functions, in particular in the presence of secondary alcohol functions that should not be oxidised. Preferred nitroxyls according to the invention are TEMPO, 4-hydroxy, 4-acetoxy and 4-acetamido TEMPO. Combinations of nitroxyls can also be used. The oxidation of cellulose with nitroxyls has been described by Isogai and Kato (see above), and by Chang and Robyt, *J. Carbohydrate Chem.* **15,** 819-830 (1996), as well as in WO 95/07303, and by Besemer et al. in *ACS Symposium Series 688, Cellulose Derivatives,* Ed. Heinze & Glasser (1998), p. 73.

Alternatively, oxidising agents favouring 2- and 3-oxidation of the anhydroglucose units of cellulose can be used. These include periodate and similar oxidising agents which convert the 2,3-dihydroxymethylene group to two carbaldehyde groups with concomitant ring opening of the anhydroglucose unit, which carbaldehyde groups can subsequently be further oxidised, if desired, to carboxyl groups using oxidising agents such as chlorite. These furthermore include hypohalites, which can directly convert the 2,3-dihydroxyethylene group to two carboxyl groups, although with some degree of depolymerisation. Also combinations of 6-oxidation (TEMPO) and 2,3-oxidation (periodate) can be used, as well as combinations of these oxidation methods with other derivations, such a carboxymethylation and introduction of cationic aminoalkyl groups.

The oxidised cellulose that can be obtained by the process of the invention is preferably 6-carboxycellulose, i.e. a cellulose in which part or all of the 6-hydroxymethyl groups have been oxidised to carboxyl groups (poly-β-glucuronic acid), or (2,3-)dicarboxycellulose. The degree of oxidation (substitution) may vary from e.g. 25 to 100 %, especially from 80 to 100 %. The oxidised cellulose of the invention is soluble is water, whether neutral, alkaline or slightly acidic. The molecular weight distribution is essentially monodisperse. The average molecular weight is at least 180,000 (DP, degree of polymerisation > 1000), in particular at least 250,000 (DP > 1400), especially at least 300,000 (DP > 1700).

If desired, the oxidised cellulose may be post-treated, e.g. to remove any residual aldehyde groups by reduction using borohydride, even though such aldehyde groups may be useful for further derivatisation, e.g. by reductive amination to produce amines, or for crosslinking reactions, e.g. to give wet strength to paper products. Alternatively, a further oxidation, e.g. with periodate, to introduce further aldehyde and/or carboxylic groups, especially at the 2- and 3-positions may be carried out to adjust the properties of the cellulosic product.

The oxidised cellulose can be used for example as a superabsorbent, especially when cross-linked with a crosslinking agent such as divinyl sulphone or diglycidyl ether or other diepoxy compounds, to produce a hydrogel. It can also be used as a calcium complexant, as a crystallisation inhibitor, as an antiflocculant, or as a wet strength agent.

### Example 1

Chemical pulp (2 g) was suspended in 85% phosphoric acid (100 ml). The mixture was stirred mechanically for two days at 5°C. The dissolved pulp was regenerated by addition of an excess of iced water and the recovered cellulose was washed thoroughly with cold water containing sodium carbonate until neutral pH.

The pretreated cellulose was suspended in water, TEMPO (40 mg) and NaBr (1 g) were added. Sodium hypochlorite (2 M) was added in 2 ml portions to a total of 12 ml. The pH was kept at 10.5 by addition of 0.5 M NaOH (total addition 20.3 ml). The temperature was kept at 4°C during the reaction. The total reaction time was 5.5 hours. The oxidised product was completely water-soluble. Sodium borohydride (100 mg) was added to reduce aldehyde groups. The product was then isolated by precipitation in 3 volumes of ethanol (96%), washed with acetone and dried under vacuum at room temperature (yield 2.2 g). The oxidation degree of the product (based on sodium hydroxide consumption) was 85%. The molar weight was estimated by GPC on a TSK G4000/G6000 column by comparison with polyacrylate standards, and by GPC couples with a multi angle laser light scattering (Malls) detector. The product consisted of one monodisperse fraction with an average molecular weight of 410,000.

The oxidised cellulose was dissolved in water (10% solution), the pH was adjusted to 4.5 and butanediol diglycidyl ether was added (10 mol%). The crosslinking was carried out at 50°C for 20 hours. The obtained gel was dried at 100°C in a fluidised bed dryer, reswollen in excess water and dried again. The particles were ground to 100-800 µm particles. The absorption under load (AUL) in synthetic urine (SU: mM urea, 60 mM KCl, 130 mM NaCl, 2,0 mM CaSO₄.2H₂O, 3,5 mM MgSO₄ and 1 mg/l Triton X-100 in deionised water) was 11 g/g. Crosslinking with divinyl sulphone resulted in even better performance than with butanediol diglycidyl ether.

### Example 2

Chemical pulp (2 g) was suspended in 50 ml of a 50% NMMO (*N*-methylmorpholine-*N*-oxide) solution in water. The suspension was heated at 110°C in order to evaporate water until the sample was dissolved. The cellulose was regenerated by washing with an excess of water. The fibres were resuspended in 200 ml water and the oxidation was carried out as described in Example 1. The oxidation degree of the product was 95%. The molar weight was estimated by GPC on a TSK G4000/G6000 column by comparison with polyacrylate standards and with the material prepared according to Example 1. The product consisted of one monodisperse fraction with an average molecular weight of 350,000.

### Comparative example A (TEMPO oxidation of cellulose without pretreatment)

Chemical pulp (2 g) was suspended in 200 ml water, TEMPO (40 mg) and NaBr (1 g) were added. Sodium hypochlorite (2 M) was added in 2 ml portions to a total of 12 ml. The pH was kept at 10,5 by addition of 0.5M NaOH. The total reaction time was 24 h. The oxidised product was not water-soluble (fibres still present). The oxidation degree was about 20%.

### Comparative example B (TEMPO oxidation of cellulose after pretreatment with sodium hydroxide - method according to Isogai and Kato)

Chemical pulp (2 g) was suspended in 100 ml 20% NaOH and was stirred for 1 hour at room temperature. The cellulose was regenerated by filtering off the sodium hydroxide and washing thoroughly with water. The fibres were resuspended in 200 ml water and the oxidation was carried out as described in Example 1. The oxidation degree of the product was 90%. The molar weight was estimated by GPC on a TSK G4000/G6000 column by comparison with polyacrylate standards, and by GPC coupled with a multi angle laser light scattering (Malls) detector. The product consisted of two fractions. The first (small) fraction consisted of material with a molecular weight of 4,000,000 and the second (large) fraction had an average molecular weight of 80,000. Attempts to cross-link this material by adding 5 up to 30 mol% divinyl sulphone to a 10% solution at pH 11 did not result in insoluble networks.

## Claims

1. A process for producing oxidised cellulose having a high molecular weight, by pre-treating cellulose so as to lower its crystallinity, and then oxidising it using an oxidising agent converting hydroxymethyl and/or hydroxymethylene groups to carbaldehyde and/or carboxyl groups, ***characterised* by** pre-treating the cellulose in a non-alkaline solvent for cellulose.

2. A process according to claim 1, in which said non-alkaline solvent is phosphoric acid.

3. A process according to claim 1, in which said non-alkaline solvent is a tertiary amine-oxide, such as *N*-methylmorpholine-*N*-oxide.

4. A process according to claim 1, in which said non-alkaline solvent is a carboxamide such as dimethylacetamide, in the presence of a lithium salt.

5. A process according to claim 1 or 4, in which said non-alkaline solvent comprises a complex of copper and ammonia or an organic amine.

6. A process according to any one of claims 1-5, in which said oxidising agent comprises a nitroxyl compound, such as TEMPO.

7. A process according to any one of claim 1-6, in which said oxidising agent comprises periodate.

8. A process according to any one of claims 1-7, in which the pre-treated cellulose is crosslinked.

9. An oxidised cellulose having a degree of carboxyl substitution of at least 0.5, being essentially monodisperse and water-soluble, and having an average molecular weight of at least 180,000 (DP > 1000).

10. An oxidised cellulose having a degree of carboxyl substitution of at least 0.5, being crosslinked and water-insoluble, and being made up of essentially monodisperse cellulose units having an average molecular weight of at least 180,000 (DP > 1000).

11. Use of an oxidised cellulose prepared according to any one of claims 1-9, or an oxidised cellulose according to claim 10 or 11, as a superabsorbent, a calcium sequestering agent, crystallisation inhibitor, a wet strength agent or an antiflocculant.
